Europäisches Patentamt

European Patent Office

Office européen des brevets

(19)

(11) Publication number: **0 312 195**
**A2**

# EUROPEAN PATENT APPLICATION

(12)

(21) Application number: **88307386.8**

(51) Int. Cl.4: **G01L 21/10**

(22) Date of filing: **10.08.88**

| | |
|---|---|
| The title of the invention has been amended (Guidelines for Examination in the EPO, A-III, 7.3).<br><br>(30) Priority: **14.04.88 GB 8808783**<br> **19.08.87 GB 8719619**<br><br>(43) Date of publication of application:<br>**19.04.89 Bulletin 89/16**<br><br>(84) Designated Contracting States:<br>**DE FR GB** | (71) Applicant: **Genevac Limited**<br>**Alpha Works Whitehouse Road**<br>**Ipswich Suffolk IP1 5LU(GB)**<br><br>(72) Inventor: **Cole, Michael**<br>**Mockbeggars Hall**<br>**Ipswich Suffolk(GB)**<br><br>(74) Representative: **Nash, Keith Wilfrid et al**<br>**KEITH W. NASH & Co. Pearl Assurance**<br>**House 90-92 Regent Street**<br>**Cambridge CB2 1DP(GB)** |

(54) **Method and device for measuring gas pressure.**

(57) A pressure gauge for measuring the pressure of a gas particularly below 1000mbar, comprises an envelope (10, 34) for containing the gas, a temperature sensor (18, 30) immersed in the gas, a resistance filament (12, 30) for supplying heating pulses to the sensor, and a circuit (22, 40) for measuring the rate of change of temperature of the sensor as it is heated and/or cooled.

EP 0 312 195 A2

# Pressure Gauge

## Field of the invention

This invention relates to a method of and a device for measuring gas pressures, particularly below 1000 mbar, and more generally in the range between $10^{-4}$ mbar and 5000 mbar.

## Background to the invention

It is known to measure the pressure of a gas by supplying heat at a known and constant rate to a sensor located in the gas, and to measure the temperature reached by the sensor in response to such heat input. The rise in temperature will be determined by several factors including the ambient temperature, the pressure, and the nature of the gas surrounding the sensor. It is also known that as the gas pressure decreases below 1000 mbar, the rate at which heat is extracted from the sensor diminishes, so that if the rate of heat input is constant the sensor temperature will rise.

Two types of pressure measuring gauges based on this principle are known for use in vacuum systems, and they are the Pirani gauge and the thermocouple gauge.

In the known Pirani gauge an electrical current is passed through a fine wire immersed in the gas and the temperature of the wire is assessed by measuring its resistance, which is a function of temperature. A relationship therefore exists between the ambient pressure perceived by the wire and the electrical resistance of the wire, and this relationship enables a gauge to be constructed which will directly read pressure, for example in mbar.

In the known thermocouple gauge a thermocouple, again immersed in the gas whose pressure is to be measured, is heated to a temperature determined by the ambient pressure and the output of the thermocouple is used to read the pressure.

However both these types of gauges suffer from limitations, in particular in the lack of sensitivity at pressures below $10^{-3}$ mbar and at pressures above 1 mbar. A further limitation is that calibration of these gauges is dependent on the thermal properties of the gas, so that the composition of the gas has to be known.

At pressures above 1 mbar most of the heat supplied is lost by conduction. However in the pressure range between $10^{-3}$ and 1 mbar the rate of loss of heat by conduction varies considerably with pressure, but only very slightly at higher pressures. At high vacuum, ie at pressures below $10^{-3}$

mbar, the heat is lost almost totally by radiation, and gas pressure again has little effect on the amount of heat lost, and therefore on the sensor temperature.

In the pressure ranges in which the heat removal rate is not sensitive to gas pressure, the change in electrical resistance for a small change in gas pressure is thus very small, and tends to be swamped by other factors causing unavoidable drift in the system.

It is known to construct a gauge in such a manner as to cause greatly increased forced or natural convection in the pressure range from 1 to 1000 mbar. Convection losses are pressure dependent in this region, and satisfactory precision readings can therefore be obtained.

It is an object of the present invention to provide a method of and device for measuring gas pressure which is an improvement on the known pressure gauges, and which preferably also extends the range over which useful pressure measurements can be taken without requiring improved convection currents in the gas.

## Summary of the invention

According to the present invention there is provided a method of measuring gas pressure, comprising the steps of periodically applying heat to a temperature sensor immersed in said gas whose pressure is to be measured, and measuring the rate of change of temperature of the sensor while it is being heated and/or cooled.

The invention also extends to a device for measuring gas pressure, comprising a temperature sensor immersed in said gas whose pressure is to be measured, means for periodically supplying heat to the sensor, and means for measuring the rate of change of temperature of the sensor while it is being heated and/or cooled.

The invention is particularly, but not exclusively, suited to the measurement of sub-atmospheric pressures.

The means for supplying heat is preferably arranged to supply heat in the form of pulses of short duration, eg. of the order of tens or hundreds of milliseconds in duration.

Said pulses of heat are preferably provided by electrical power pulses which decay to a value above zero.

Said sensor may take the form of a thermocouple to which heat is supplied through a separate filament.

Alternatively said temperature sensor may comprise a filament which is directly heated by electric current and whose resultant rise in temperature is measured. This is based on the pressure measurement gauge known as the Pirani gauge. The temperature of the filament may in this case be measured by determining the resistance of the filament.

By virtue of the invention the rate of change of temperature over a small temperature range, and measured in a short interval of time, is thereby less affected by some of the principal sources of drift in the system. This allows the range of practical measurements for this type of pressure gauge to be extended, and also allows greater accuracy of measurement in the range of practical measurement of a gauge in which the steady state temperature is used as the pressure indicator.

Another advantage of measuring the rate of change of temperature induced by short pulses of heat at the higher pressures (above 1 mbar), is that the instantaneous rate of heat loss is almost entirely determined by the volume heat capacity of the gas which varies with pressure in the range in which conductive cooling (which determines the heat loss in this pressure range in a steady state device) is almost constant with pressure.

A further advantage of measurements based on pulsing the heat input and measuring heating or cooling rates is that several different pulse lengths can be used at the same pressure to give information which can be processed by a computer or microprocessor to yield more information on the thermal properties of the gas. Still more information can be derived by pulsing a second filament of different diameter in the same gas environment eg in the same envelope.

This extra information allows the thermal properties of the gas to be determined so that the pressure can be calculated correctly even if the gas composition is unknown. For example, if the gas is a mixture of two known components but in unknown proportions, the information could allow an estimate to be made of the proportions of the two components present.


Brief description of the drawings

Two embodiments of the invention will now be described, by way of example only, with reference to the accompanying drawings in which:-

Figure 1 is a circuit diagram showing a first embodiment of the invention;

Figure 2 is a side view of a vacuum envelope employed in the circuit of Figure 1;

Figure 3 shows part of a circuit in accordance with a second embodiment of·the invention; and

Figure 4 is a side view of a vacuum gauge employed in the embodiment of Figure 3.

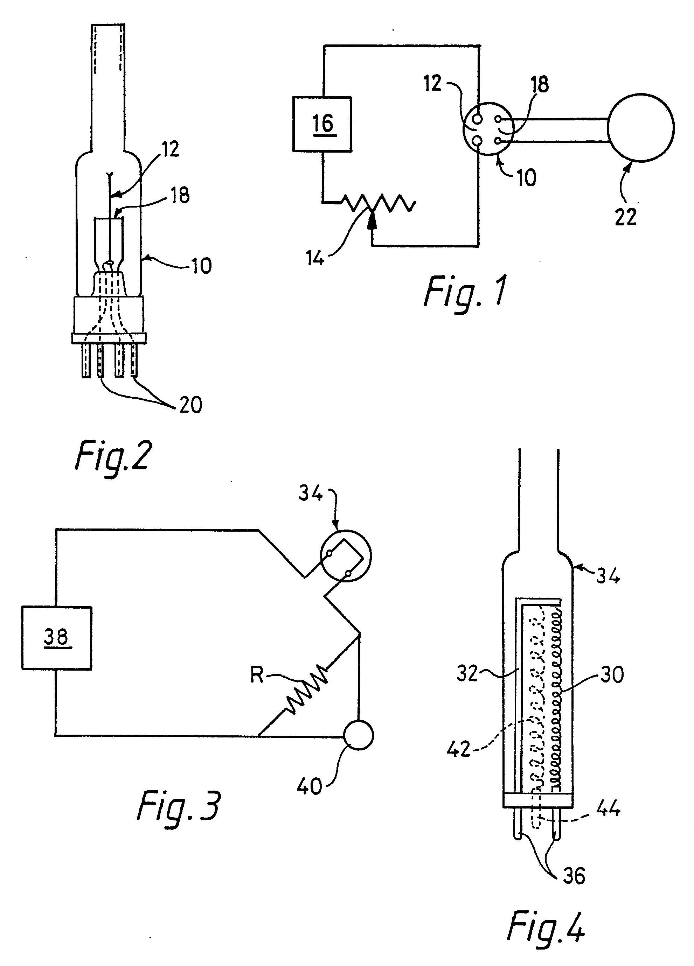

Referring first to the embodiment of Figure 1 and 2, a vacuum envelope or container 10 contains a filament 12 to which heat is supplied by an electric circuit consisting of an adjustable resistor 14 and a power supply 16 capable of supplying short pulses of power to the filament 12. A thermocouple 18 is disposed across the filament 12 in the vacuum envelope 10 and is connected through connectors 20 passing outside the vacuum envelope, to a circuit indicated generally at 22. The circuit 22 measures the rate of change of the voltage output of the thermocouple 18 as it is heated or cooled and converts this information into a pressure reading or print-out.

Figures 3 and 4 show a second embodiment of the invention, which is based on the Pirani gauge. Here there is a single filament 30 held by a support 32 and mounted in a vacuum envelope 34. Terminals 36 from the filament external of the envelope are connected via a fixed resistor R to a power source 38 capable of supplying short pulses of power to the filament 30. In between these short pulses the power does not drop to zero; instead it reduces to a value low enough to avoid appreciable heating of the filament but high enough to allow a measuring circuit 40, which is connected across the resistor R, to measure the varying current passing through the resistor and the filament, and so derive the rate of change of resistance and hence of temperature of the filament as it heats or cools. Again the circuit processes this information to yield a read-out or print-out of pressure.

Figure 4 also shows in dotted outline a modification of the vacuum gauge, which is particularly useful where there is a mixture of gases of different thermal properties whose pressure is to be determined.

A second filament 42 is mounted from the support 32 in parallel with the first filament 30, and is provided with a separate external terminal 44. The filament 42 has a different diameter from that of the first filament 30 so that it has a different heating/cooling rate.

A circuit similar to Figure 3 applies known pulses of electric power to the filament 42 which pulses may be of different pulse length from that applied to the filament 30. By measuring the heating/cooling rate of the filament 42 and comparing it with that for the filament 30, so additional information can be obtained. Thus if the properties of say two gases (or vapours) are not known, the additional information can enable such proportion to be estimated by processing the information in a computer.

**Claims**

1. A method of measuring gas pressure, in which a gas whose pressure is to be measured is enclosed in a container, characterised by the steps of periodically applying heat to a temperature sensor (18, 30) immersed in said gas, and measuring the rate of change of temperature of the sensor while it is being heated and/or cooled.

2. A device for measuring gas pressure, comprising a container enclosing a gas whose pressure is to be measured, and temperature sensor means immersed in said gas, characterised by heating means (12, 30) for periodically supplying heat to the sensor means (18, 30), and measuring means (22, 40) for measuring the rate of change of temperature of the sensor means (18, 30) while it is being heated and/or cooled.

3. A device as claimed in claim 2 characterised in that the heating means (12, 30) supplies heat in the form of pulses of short duration of the order of tens to hundreds of milliseconds in duration.

4. A device as claimed in claim 3 characterised in that said pulses of heat are provided by electrical power pulses which decay to a value above zero.

5. A device as claimed in any one of claims 2 to 4 characterised in that said sensor means is in the form of a thermocouple (18) to which heat is supplied through a separate filament (12).

6. A device as claimed in any one of claims 2 to 4 characterised in that the heating means is provided by electric power pulses and said sensor means comprises an electric resistance filament (30) which is directly heated by said electric pulses and whose resultant rate of change of temperature is measured by a measuring circuit (40).

7. A device as claimed in claim 6 characterised in that the measuring circuit (40) measures the temperature of the filament by determining the electrical resistance thereof.

8. A device as claimed in any one of claims 1 to 7 characterised in that said heating means (12, 30) supplies heat at a plurality of different pulse lengths to enable further information of the gas to be derived.

9. A device as claimed in any one of claims 6 to 8 characterised in that said sensor means further comprises a second filament (42) of a diameter different from the first mentioned filament to enable further information of the gas to be derived, and further comprising second measuring means for measuring the temperature thereof.

*Fig. 1*

*Fig.2*

*Fig. 3*

*Fig.4*